Europäisches Patentamt

European Patent Office

Office européen des brevets

(11) Veröffentlichungsnummer: **0 418 213 A2**

## (12) EUROPÄISCHE PATENTANMELDUNG

(21) Anmeldenummer: 90890252.1

(51) Int. Cl.5: **B23Q 5/28**

(22) Anmeldetag: 31.08.90

(30) Priorität: 11.09.89 AT 2124/89

(43) Veröffentlichungstag der Anmeldung:
20.03.91 Patentblatt 91/12

(84) Benannte Vertragsstaaten:
BE CH DE DK ES FR GB GR IT LI LU NL SE

(71) Anmelder: VOEST-ALPINE STEINEL
Gesellschaft m.b.H.
Lunzerstrasse 64
A-4020 Linz(AT)

(72) Erfinder: Rechberger, Franz

Thurnerschlag 14
A-4184 Ahorn(AT)
Erfinder: Meiser, Peter, Dipl.-Ing.
Hillerstrasse 9
A-4030 Linz(AT)
Erfinder: Grauli, Siegfried
Richenerstrasse 54
W-7519 Gemmingen(DE)

(74) Vertreter: Hübscher, Heiner, Dipl.-Ing. et al
Spittelwiese 7
A-4020 Linz(AT)

(54) Von Hand steuerbare Drehmaschine.

(57) Um die bei Drehmaschinen mit einer Handsteuerung sonst erforderlichen Getriebe, Schaltkupplungen, Bremsen, Wechselräder u. dgl. vermeiden zu können, ohne auf eine einfache Handsteuerung verzichten zu müssen, wird vorgeschlagen, daß die Vorschubantriebe für den Werkzeugschlitten (5) aus je einem regelbaren Drehstrommotor (11, 14) zum Antrieb der als Kugelgewindespindeln ausgebildeten, für den Schlittenantrieb vorgesehenen Spindeln (12, 15) bestehen, daß die Handräder (24, 25) zum Verfahren des Werkzeugschlittens (5) je einen elektrischen Drehgeber (26) verstellen, der mit einer Steuereinrichtung (17) für den zugehörigen Drehstrommotor (11; 14) verbunden ist, und daß die auf dem Werkzeugschlitten (5) vorgesehene Steuereinrichtung (17) eine Eingabe (18) für die Vorschubwerte und das vorwählbare Übersetzungsverhältnis zwischen der Handraddrehung und der Spindeldrehung sowie eine Anzeige (19) für die eingegebenen Werte und die Istwerte der jeweiligen Schlittenstellung aufweist.

EP 0 418 213 A2

## VON HAND STEUERBARE DREHMASCHINE

Die Erfindung bezieht sich auf eine von Hand steuerbare Drehmaschine, bestehend aus einem Maschinenbett mit Führungsbahnen für wenigstens einen einen Längs- und einen Planschlitten aufweisenden Werkzeugschlitten, einem Hauptantrieb für die Arbeitsspindel, einem Vorschubantrieb mit einer Leit-und Zugspindel für den Längsschlitten, einem Vorschubantrieb mit einer Querspindel für den Planschlitten und aus je einem auf dem Werkzeugschlitten angeordneten Handrad zum Verfahren des Längs- und des Planschlittens entlang der zugehörigen Spindel.

Bei herkömmlichen, von Hand steuerbaren Drehmaschinen ist ein von einem Drehstrommotor mit konstanter Drehzahl antreibbares, vielstufiges Hauptgetriebe für die Arbeitsspindel vorgesehen, von dem der Antrieb für den Werkzeugschlitten über ein Nebengetriebe abgeleitet wird, das mit der Leit- und Zugspindel für den Längsschlitten des Werkzeugschlittens in Antriebsverbindung steht. Über den mit dem Längsschlitten verbundenen Schloßkasten kann außerdem die Querspindel für den Vorschub des Planschlittens angetrieben werden, wobei ein Schaltgetriebe für den Längs- und Plangang vorgesehen ist. Neben diesen vom Hauptgetriebe abgeleiteten Vorschubantrieben für den Werkzeugschlitten können der Längs-und der Planschlitten auch über Handräder mit entsprechenden mechanischen Antriebsverbindungen verfahren werden. Der für die Vorschubantriebe erforderliche Aufwand für die Getriebe, Schaltkupplungen, Bremsen, Wechselräder u. dgl. ist folglich sehr hoch, zumal ja enge Toleranzen eingehalten werden müssen.

Neben diesen von Hand aus gesteuerten Drehmaschinen sind numerisch gesteuerte Drehmaschinen im Einsatz, bei denen die Vorschubantriebe für den Werkzeugschlitten unter Vermeidung eines größeren Konstruktionsaufwandes für Getriebe, Schaltkupplungen, Bremsen u dgl. durch regelbare Drehstrommotoren gebildet werden, deren Steuerung über einen Rechner erfolgt, der entsprechend programmiert werden muß. Solche rechnergesteuerte Drehmaschinen eignen sich allerdings kaum für Einzelbearbeitungen, sondern vielmehr für Serienfertigungen, weil ja das Steuerprogramm an die sich ändernden Bearbeitungsanforderungen angepaßt werden muß, was geschultes Bedienungspersonal erfordert.

Der Erfindung liegt somit die Aufgabe zugrunde, eine Drehmaschine der eingangs geschilderten Art so zu verbessern, daß die Vorteile numerisch gesteuerter Drehmaschinen hinsichtlich des einfachen Aufbaus und der stufenlosen Regelung der Vorschubantriebe ausgenützt werden können, ohne auf die herkömmliche, für eine Einzelfertigung vorteilhafte, einfache Handsteuerung verzichten zu müssen.

Die Erfindung löst die gestellte Aufgabe dadurch, daß die Vorschubantriebe für den Längs- und den Planschlitten aus je einem regelbaren Drehstrommotor zum Antrieb der als Kugelgewindespindeln ausgebildeten Spindeln bestehen, daß die Handräder zum Verfahren des Werkzeugschlittens je einen elektrischen Drehgeber verstellen, der mit einer Steuereinrichtung für den zugehörigen Drehstrommotor verbunden ist, und daß die vorzugsweise auf dem Werkzeugschlitten vorgesehene Steuereinrichtung eine Eingabe für das vorwählbare Übersetzungsverhältnis zwischen der Handraddrehung und der Drehung der zugehörigen Spindel bzw. des zugehörigen Drehstrommotors sowie eine Anzeige für die eingegebenen Werte und die Ist werte für die jeweilige Schlittenstellung aufweist.

Da durch diese Maßnahmen die Handräder zur Schlittenbewegung in der Längs- und in der Planachse als Verstellrad für einen Drehgeber dienen, der den Sollwert des jeweiligen Drehschrittes der zugehörigen Spindel der Steuereinrichtung vorgibt, kann der zugehörige Drehstrommotor unter Berücksichtigung des vorgewählten Übersetzungsverhältnisses zwischen der Handraddrehung und der Spindeldrehung entsprechend angesteuert werden, so daß der zu verfahrende Schlitten über eine Handraddrehung verstellt wird, und zwar hinsichtlich der Handsteuerung in übereinstimmender Weise mit herkömmlichen Schlittensteuerungen über von Hand aus betätigbare Antriebsräder. Der Istwert der jeweiligen Schlittenstellung kann dabei an einer Anzeige der Steuereinrichtung abgelesen werden, die zu diesem Zweck vorteilhaft am Werkzeugschlitten selbst vorgesehen wird. Die Handräder zum Verfahren der Schlitten können dabei an den bei gattungsgleichen Drehmaschinen gewohnten Stellen am Werkzeugschlitten angeordnet sein, was übereinstimmende Bedienungsverhältnisse schafft. So ist es beispielsweise vorteilhaft, das Handrad zum Verstellen des Planschlittens in Verlängerung der hiefür vorgesehenen Querspindel vorzusehen, um dem Dreher bereits den optischen Eindruck vermitteln zu können, daß dieses Handrad zum Verstellen des Planschlittens dient. Der einzige Bedienungsunterschied zu herkömmlichen Drehmaschinen ist darin zu sehen, daß die einzelnen Vorschübe nicht über die hiefür vorgesehenen Getriebe eingestellt, sondern über die Eingabe der Steuereinrichtung vorgewählt werden, was jedoch keiner besonderen Programmierkenntnisse bedarf, zumal ja die jeweils eingegebenen Werte auf der Anzeige abgelesen werden können.

Die Verstellung eines Drehgebers verlangt ein vergleichsweise geringes Verstellmoment. Damit die für die Verstellung des Werkzeugschlittens in der Längs- und in der Planachse gewohnten Verdrehwiderstände für die Handräder sichergestellt werden können, können den Handrädern eine den Verdrehwiderstand bestimmende Bremseinrichtung zugeordnet werden, so daß auch bezüglich der Handhabung mit gattungsgemäßen Drehmaschinen vergleichbare Bedienungsverhältnisse vorliegen.

Herkömmliche, von Hand aus gesteuerte Drehmaschinen weisen im Bereich des Schloßkastens einen Steuerschalter in Form eines Vierwegkreuzschalters auf, der über entsprechende Schaltkupplungen die Vorschubantriebe für die Längs- und die Planachse je nach Schaltstellung in beiden Bewegungsrichtungen betätigt. Der Werkzeugschlitten der erfindungsgemäßen Drehmaschine kann ebenfalls einen solchen Steuerschalter aufweisen, der jedoch die Steuereinrichtung im Sinne der Ansteuerung der beiden Vorschubantriebe beaufschlagt.

Weist die mit einer Sollwerteingabe für die Steuerung des Hauptantriebes versehene Steuereinrichtung einen Steuerausgang für den aus einem regelbaren Drehstrommotor und einem zweistufigen Schaltgetriebe bestehenden Hauptantrieb auf, so kann der Antrieb der Arbeitsspindel ebenfalls über die Steuereinrichtung angesteuert werden, was die Steuerung der Vorschubantriebe in Abhängigkeit vom Antrieb der Arbeitsspindel, vereinfacht. In diesem Zusammenhang werden außerdem übliche Bedienungsverhältnisse sichergestellt, wenn der Werkzeugschlitten einen an die Steuereinrichtung angeschlossenen Betätigungsschalter für den Hauptantrieb trägt, so daß nach der Eingabe der für die Arbeitsspindel gewünschten Drehzahl die Arbeitsspindel über diesen Betätigungsschalter in der einen oder anderen Drehrichtung eingeschaltet werden kann.

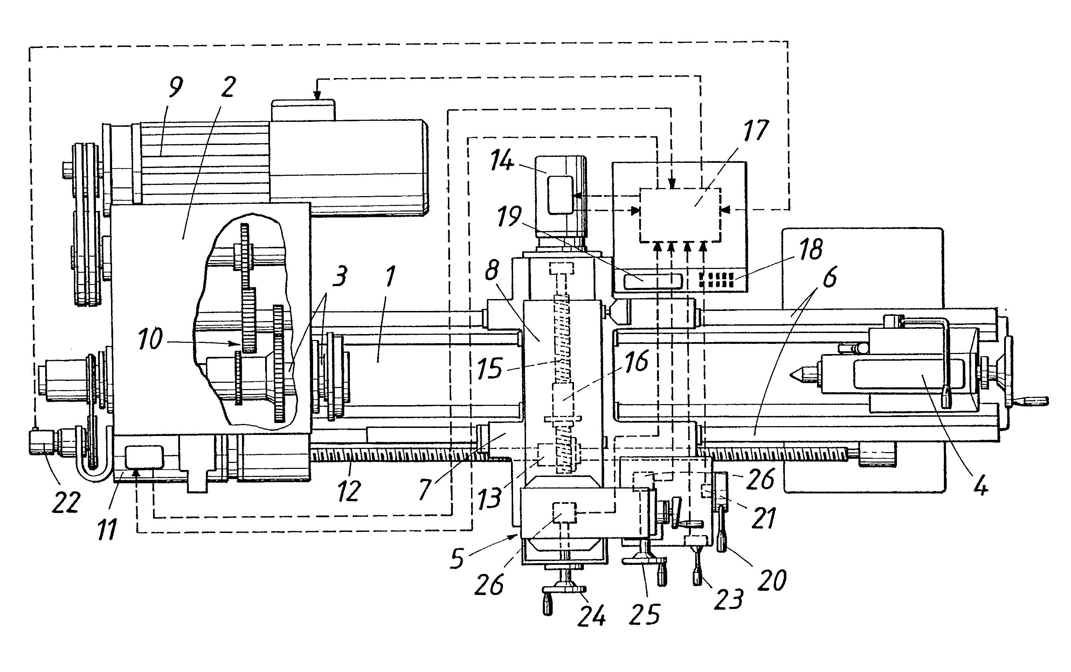

In der Zeichnung ist der Erfindungsgegenstand beispielsweise dargestellt, und zwar wird eine erfindungsgemäße, von Hand steuerbare Drehmaschine in einer schematischen Draufsicht mit einem Blockschaltbild der Steuerung gezeigt.

Die dargestellte Drehmaschine besteht in herkömmlicher Weise aus einem Maschinenbett 1, das einen Spindelkasten 2 mit einer Arbeitsspindel 3, einen Reitstock 4 und einen Werkzeugschlitten 5 trägt, der einen entlang von Führungsbahnen 6 des Maschinenbettes 1 verfahrbaren Längsschlitten 7 und einen auf dem Längsschlitten 7 verfahrbaren Planschlitten 8 aufweist. Zum Antrieb der Arbeitsspindel 3 dient ein regelbarer Drehstrommotor 9, der mit einem zweistufigen Schaltgetriebe 10 den Hauptantrieb der Drehmaschine bildet. Der Vorschubantrieb für den Längsschlitten 7 besteht aus einem regelbaren Drehstrommotor 11 für die Leit- und Zugspindel 12, die als Kugelgewindespindel mit vorgespanter Mutter 13 ausgebildet ist, um den Längsschlitten 7 spielfrei verfahren zu können. In der gleichen Art und Weise ist der Vorschubantrieb für den Planschlitten 8 aus einem regelbaren Drehstrommotor 14 für die Querspindel 15 aufgebaut, die wiederum aus einer Kugelgewindespindel mit vorgespanter Mutter 16 besteht.

Zum Ansteuern der Drehstromantriebe 9, 11 und 14 ist am Werkzeugschlitten 5 eine Steuereinrichtung 17 vorgesehen, die mit einer Eingabe 18 für die jeweils vorzugebenden Sollwerte bzw. Übersetzungsverhältnisse und mit einer Anzeige 19 für die eingestellten Sollwerte und die jeweiligen Istwerte der Stellung des Werkzeugschlittens 5 verbunden ist. Die Handsteuerung der Drehstrommotoren 9, 11 und 14 erfolgt dabei über am Werkzeugschlitten 5 vorgesehene Bedienungselemente unter herkömmlichen Bedienungsbedingungen. So ist für die Betätigung des Hauptantriebes ein über einen Handgriff 20 schaltbarer Betätigungsschalter 21 vorgesehen, der entsprechende Steuerbefehle an die Steuereinrichtung 17 abgibt, um die Arbeitsspindel 3 mit der über die Eingabe 18 eingegebenen Drehzahl anzutreiben, die über einen Drehimpulsgeber 22 erfaßt und an die Steuereinrichtung 17 rückgemeldet wird. Die Drehrichtung der Arbeitsspindel wird durch den Drehsinn der Betätigungsbewegung des um eine spindelparallele Achse drehbar gelagerten Handgriff es 20 bestimmt.

Die Vorschubantriebe für die Längsachse und die Planachse können in ähnlicher Weise über einen Steuerschalter 23 in Form eines Vierwegkreuzschalters angesteuert werden, der bei einer Verstellung parallel zur Leit- und Zugspindel 12 je nach der Bewegungsrichtung den Drehstrommotor 11 über die Steuereinrichtung 17 in der einen oder anderen Drehrichtung einschaltet, und zwar mit der jeweils vorgegebenen Vorschubgeschwindigkeit oder einem Eilvorschub. Die Betätigung des Steuerschalters 23 in einer zur Leit- und Zugspindel 12 senkrechten Ebene bedingt in analoger Weise eine Ansteuerung des Drehstrommotors 14 für die Planachse.

Der Längsschlitten 7 und der Querschlitten 8 können außerdem über Handräder 24 und 25 verfahren werden, die zu diesem Zweck mit elektrischen Drehgebern 26 verbunden sind, so daß der Steuereinrichtung 17 über die Drehgeber 26 der jeweilige Sollwert der Drehverstellung der Spindeln 12 und 15 in Abhängigkeit von dem jeweils eingestellten Übersetzungsverhältnis zwischen der Handraddrehung und der Spindeldrehung vorgegeben werden kann. Über die Handräder 24 und 25 kann folglich der Werkzeugschlitten 5 sowohl in der Längs- als auch in der Planachse verfahren werden, wobei die jeweiligen Istwerte der Schlittenstellung über nicht näher dargestellte, den Drehstrommotoren 11 und 14 bzw. den Spindeln 12 und 15 zugeordnete Drehimpulsgeber der Steuereinrichtung 17 rückgemeldet und in der Anzeige 19 sichtbar gemacht werden.

Auf der dargestellten Drehmaschine können somit alle auch bei herkömmlichen Drehmaschinen möglichen Werkstückbearbeitungen unter den üblichen Bedienungsverhältnissen mit den Vorteilen regelbarer Drehstrommotoren für die Vorschubantriebe durchgeführt werden, was nicht nur die Wirtschaftlichkeit, sondern auch die erreichbare Bearbeitungsgenauigkeit erhöht, z. B. durch die stufenlose Antriebsregelung.

**Ansprüche**

1. Von Hand steuerbare Drehmaschine, bestehend aus einem Maschinenbett (1) mit Führungsbahnen (6) für wenigstens einen einen Längs- und einen Planschlitten (7, 8) aufweisenden Werkzeugschlitten (5), einem Hauptantrieb für die Arbeitsspindel (3), einem Vorschubantrieb mit einer Leit- und Zugspindel (12) für den Längsschlitten, einem Vorschubantrieb mit einer Querspindel (15) für den Planschlitten (8) und aus je einem auf dem Werkzeugschlitten (5) angeordneten Handrad (24, 25) zum Verfahren des Längs- und des Planschlittens (7, 8) entlang der zugehörigen Spindel (12, 15), dadurch gekennzeichnet, daß die Vorschubantriebe für den Längs- und den Planschlitten (7 und 8) aus je einem regelbaren Drehstrommotor (11; 14) zum Antrieb der als Kugelgewindespindeln ausgebildeten Spindeln (12, 15) bestehen, daß die Handräder (24, 25) zum Verfahren des Werkzeugschlittens (5) je einen elektrischen Drehgeber (26) verstellen, der mit einer Steuereinrichtung (17) für den zugehörigen Drehstrommotor (11; 14) verbunden ist, und daß die vorzugsweise auf dem Werkzeugschlitten (5) vorgesehene Steuereinrichtung (17) eine Eingabe (18) für die vorgebbaren Vorschubwerte und das vorwählbare Übersetzungsverhältnis zwischen der Handraddrehung und der Drehung der zugehörigen Spindel (12; 15) bzw. des zugehörigen Drehstrommotors (11; 14) sowie eine Anzeige (19) für die eingegebenen Werte und die Istwerte der jeweiligen Schlittenstellung aufweist.

2. Drehmaschine nach Anspruch 1, dadurch gekennzeichnet, daß den Handrädern (24, 25) eine den Verdrehwiderstand bestimmende Bremseinrichtung zugeordnet ist.

3. Drehmaschine nach Anspruch 1 oder 2, dadurch gekennzeichnet, daß der Werkzeugschlitten (5) einen die Steuereinrichtung (17) im Sinne der Ansteuerung der beiden Vorschubantriebe mit den eingegebenen Vorschubwerten beaufschlagen den Steuerschalter (23) in Form eines Vierwegkreuzschalters aufweist.

4. Drehmaschine nach einem der Ansprüche 1 bis 3, dadurch gekennzeichnet, daß die mit einer Sollwerteingabe (18) für die Steuerung des Hauptantriebes versehene Steuereinrichtung (17) einen Steuerausgang für den aus einem regelbaren Drehstrommotor (9) und einem zweistufigen Schaltgetriebe (10) bestehenden Hauptantrieb aufweist.

5. Drehmaschine nach Anspruch 4, dadurch gekennzeichnet, daß der Werkzeugschlitten (5) einen an die Steuereinrichtung (17) angeschlossenen, mit einem Handgriff (20) versehenen Betätigungsschalter (21) für den Hauptantrieb trägt.